# EUROPEAN PATENT APPLICATION

(11) **EP 2 168 737 A1**
(43) Date of publication of application: **31.03.2010**
(21) Application number: 07803638.1
(22) Date of filing: 23.07.2007
(51) Int. Cl.: B27K 3/08, A01N 25/00, B27K 3/52

(54) **METHOD FOR OBTAINING A FINISHED WOOD PRODUCT, USING NANOTECHNOLOGY**

(71) Applicant: Tramat, S.L., Pol. Ind Valle de Güimar Parcela 10, manzana 1 38509 Candelaria- Santa Cruz de Tenerife (ES)
(72) Inventor: GONZALO PEREZ, Antonio, E-38509 Candelaria- Santa Cruz de Tenerife (ES)
(74) Representative: Pons Ariño, Angel
(86) International application number: PCT/ES2007/000451
(87) International publication number: WO 2009/013361

(57) **Abstract**

The invention relates to a method for obtaining a finished wood product, using an autoclave including a chamber (1). According to the invention, sheets of dry wood (2) having a moisture content of less than 25 % are introduced into the chamber of the autoclave and an initial vacuum is applied in order to extract the air from inside the chamber and the wood. Subsequently, a preservative (3) to be absorbed by the wood is introduced into the chamber without altering the vacuum and when the chamber has been filled with said preservative a pressure is applied until the wood is saturated. The excess preservative solution is then returned to a tank and a final vacuum is applied to re-establish the internal pressure of the wood and to dry same. The invention is **characterised in that** the preservative to be absorbed by the wood is an emulsion (3) formed by a mixture of a water-soluble preservative with added nanoparticles or an oil-soluble preservative with added nanoparticles, preferably carbon nanotubes, clay nanotubes or similar. The system can also be brought to atmospheric pressure, after the autoclave has been flooded, and a second vacuum can be applied to remove the excess preservative solution.

## Description

### FIELD OF THE INVENTION

The object of the present invention is a method and a product which allows giving properties of resistance in sheets of wood, as well as a form of achieving a finished wood product, in which the properties of characteristic resistance to flexural strength can be determined, in order to be used according to the different rules governing in terms of hardness, internal protection, etc. with sufficient accuracy by using nanotechnology, so that on achieving a product with a linear and predictable mechanical behaviour we would have a construction material par excellence.

### BACKGROUND OF THE INVENTION

The great variety of uses, as well as the clear advantages of wood compared to other materials, such as its availability in different shapes and sizes, great resistance in relation to weight, easy to work and low heat conductivity, among others, are widely known and have allowed this material to stand out over others. However, wood in its natural state also has some limitations mainly relating to the susceptibility of being attacked by some live organisms which may cause it irreparable damages. These organisms, among which we have fungi, insects, bacteria and marine borers, need favourable conditions for their development inside the wood, specifically of temperature and moisture, as well as a source of food provided by the wood; on the other hand, wood has the additional problem that its material resistance factor cannot be determined, since it depends on the type of wood.

Faced with these potential hazards, methods arise to protect wood which incorporate preservative substances in them, i.e. chemical products which do not damage it, but which are toxic for the organisms which feed on it. Protecting the wood does not consist of a superficial physical or mechanical protection, it is necessary to definitively make it insensitive to biological attacks throughout the surface where they may develop. The objective of a protection treatment is to give the greatest possible durability to a wood product or work.

The possibility of treating the wood is conditional upon its impregnability, in other words, the capacity for liquids to penetrate in and circulate through the wood. It is extremely variable depending on the species, the area of wood affected, the circulation direction (parallel or perpendicular to the grain of wood) and even sometimes by a specific species, depending on where it comes from or the growth conditions.

Two methods are distinguished in wood preservation, those performed with and without pressure.

In impregnation without pressure, the properties of penetration and natural distribution of the treatment product in the wood are used. It is thus a passive process, since the amount of product absorbed by the wood is irregular, not controllable a priori and dependent on numerous parameters (species, surface condition, moisture of the wood, etc.)

In contrast, in deep impregnation with pressure, the product penetration is mechanically favoured by using a vacuum and pressure in an autoclave, which is a closed enclosure. It is a dynamic process whereby it is possible to regulate, to a certain extent, the depth of product penetration, and its concentration in the treated area. This process therefore allows a perfect mastery of treatment and an optimization of its features, depending on the requirements and the risks together with the situation in service of the wood.

In processes with pressure, the wood is impregnated in a closed autoclave by applying a pressure considerably greater than atmospheric pressure. The best known process most widely used by the preservation industry is called full-cell or Bethell. The successive phases of the process are as follows:
- The previously conditioned wood (dry and with a moisture content of less than 25%) is loaded in an autoclave and a vacuum is applied in order to extract the air from inside it and the greatest possible quantity of air from the wood (vacuum of at least 85% during at least 30 to 60 minutes)
- The preservative at ambient temperature or another temperature, depending on the treatment, is introduced in the autoclave without altering the vacuum level.

- Once the preservative fills the autoclave, pressure is applied (10 to 12 bars) until the wood has no more absorption capacity or until the required retention in accordance with standards and specifications. The pressure applied allows accelerating the absorption. This pressure is maintained until complete saturation, which corresponds to the total filling of the accessible cellular vacuums. According to the species and the sections, this phase may last from 30 minutes to 3 hours, even longer on occasions.
- After applying pressure, it is released and all the preservative solution not injected in the wood is returned to a tank.
- Application of a final vacuum, designed to rebalance the internal pressures in the wood, to stop the scope of air that had been compressed during the pressure phase and to obtain a transpired wood surface, dripfree on exiting the autoclave.

The pressure-free preservation methods are the simplest for treating wood, the equipment used also being simple as they are only at atmospheric pressure. These processes are useful when the risk situation of the wood is low and requires a small protection. The most common forms of application are by brush, spraying, immersion, hot-cold bath and those that use diffusion phenomenon.

A modern variant of the pressure-free impregnation method is the double vacuum or "vac-vac" process. This technique was developed to provide the wood with a low-depth protection treatment, "wrapping" type. This type of process is sufficient when one wants to give long-term preservation, under low to average risk condition, for products such as mouldings, engineered wood, doors and windows in their finally processing stage. This special characteristic of the process gives optimization of the use of the preservative and minimizes the increase in moisture content of the wood. The double vacuum process considers the following stages:
- The wood is housed within an autoclave especially designed for the treatment, which is hermetically sealed.
- Generating a vacuum inside the autoclave in order to reduce to an acceptable level the amount of air found within the cellular cavities of the wood.
- Once this vacuum point has been reached, the autoclave is flooded with the preservative to be absorbed by the wood.
- After the autoclave is flooded the system is brought to atmospheric pressure until reaching a desired absorption level.
- A second vacuum is applied to remove the excess preservative solution.

When the double vacuum technique is applied, the moisture content of the wood to be treated must be in the same moisture conditions in which it is going to be used. Once the process has finished, and after a short time so that the organic solvent evaporates, the wood does not undergo changes in its moisture content.

All protection products must contain three fundamental elements: active matter, to give biological efficacy, a carrier or solvent, to transport the active matter to the inside of the wood, and fixing principles, to guarantee that protection is maintained throughout the time of the work service.

In terms of currently known preservatives for wood, two groups are distinguished:
- Oil-soluble preservatives.
- Water-soluble preservatives.

Within oil-soluble preservatives we have creosote, oil derived from coal tar distillation and very effective with disadvantages such as their bad smell, low paintability and low fire resistance; and pentachlorophenol, and which can be used in a 5% solution by weight in any medium or heavy mineral oil.

Water-soluble preservatives are formulations of salts of different metals (Boron, Arsenic, Copper, Zinc, etc.). Some act as insecticides and others as fungicides, whilst others can act as fixers of the active matter in the wood, where we have the CCA (Chromated Copper Arsenate) salt, the most widely used in the world.

Alternatives to CCA due to its restrictions for ground level applications, in the USA arsenic-free preservatives are used: ACQ (Alkaline Copper Quaternary), CBA (Copper Boron Azole) and Copper bis-(N- cyclohexyldiazeniumdioxy) (Cu-HDO or copper xyligen). IPBC, TBTO and CPF are also used for products not in direct contact with the ground.

In Europe, alternative products for CCA are Copper Benzalkonium Chloride, Copper Boron Tebuconazole, Copper Copper-HDO, Copper Copper-HDO Boron, Copper polymeric betaine, CCB and CCP. On ground level we have Light Organic Solvent Preservatives (LOSP): TBTO (Tributyl tin oxide) and TBTN (tributyl tin naphthenate).

In New Zealand and Australia CCA continues to be used in all type of applications, although ACQ and CBA are alternatives. At ground level we have TBTO and TBTN (LOSP).

In the present invention the wood protection process known as Bethell or full-cell (previously explained) is used, but with the particularity of using nanoparticles together with the preservative, preferably carbon or clay nanotubes, which are introduced inside the wood, which penetrate the wood within limits which depend on the specific resistance to flexural strength requirements required by the building codes.

From diverse nanoparticles exist the so-called carbon nanotubes (CNT) which are materials solely formed by carbon, where the basic unit is a wound graphitic plane which forms a cylinder, forming tubes whose diameter is in the order of a few nanometres.

Carbon nanotubes are formed from curved and closed hexagonal networks, forming nanometric carbon tubes with a series of fascinating properties which support the interest they have awoken in numerous technological applications. They are light, hollow and porous systems which have high mechanical resistance and, therefore, interesting for the structural reinforcement of materials and formation of low-weight composites, high resistance to traction and enormous elasticity.

Electronically, it has been verified that the nanotubes behave like one-dimensionally ideal quantum wires with insulating behaviour, semiconductor or metal depending on the geometric parameters of the tubes. Another of its interesting properties is its high electron emission capacity. In this field, its interest stems from the fact that they are capable of emitting electrons at 0.11 eV of energy whilst the best electron emitters used at present emit in a range of between 0.6 and 0.3 eV. In addition to the narrow energy emission range, CNTs have other advantages compared to the liquid crystals used in flat screens such as: wide angle of vision, capacity of working in extreme temperature conditions and sufficient brightness to be able to see images in sunlight.

The innovative aspect of the carbonaceous materials of nanometric scale, fullerenes and nanotubes, lies in that fact that they have the following properties:
1. Ability for working on a molecular scale, atom by atom. This makes it possible to create large structures with new molecular organization.
2. They are "base" materials, used for the synthesis of nanostructures by self-assembly.
3. Unique properties and symmetry which determine their potential applications in fields ranging from electronics, composite formation, energy storage, sensors or biomedicine.

The use of a product created with nanotechnological progress for protecting wood by the company Nanotec Pty Ltd, from Australia is known. It is called "Nanoseal Wood" and it is a water-based ultra-hydrophobic colloidal solution with self-assembly properties which form the functional structure of the surface. A repellent effect is achieved through a combination of molecular changes in the surface structure and hydrophobic properties. It is a treatment for the wood surface which protects the wood not only by controlling the moisture and water content, but also by protecting the surface from ultraviolet radiation.

Water is one of wood's main enemies, and the application of "Nanoseal Wood" means that water simply drops off the wood, without penetrating within the substrate. The nanoparticles self-assemble on a 25-nanometre single layer structure, which gives greater protection against UV radiation.

Finally, it has the advantage of being a product which does not harm the environment, since it contains no volatile organic compounds (VOC), solvents, oils or pesticides.

The company Nanotecnología Spain has a product, PROSIL-70, used for the transporting and storage of wood without having to cover or protect it from the environment. It avoids storage in closed warehouses. Aside from having high water and moisture protection, it also protects against UV radiation.

Both the process used by Nanotec Pty Ltd and that used by Nanotec Spain to protect wood consist of surface treatments thereof, whilst in the present invention it is an internal treatment of same with carbon nanotubes.

In the current state of the art there are patents related to different wood coatings, as well as processes for carrying this out. Hence, document ES 2226217 relates to transparent lacquer binders which contain nanoparticles resistant to scratches, a method for its preparation as well as its use. Said binder is polymer-based and contains pyrogenic silicic acids, and it is used in transparent lacquers with two components. Also, document ES 2182805 relates to modified adhesion agents with nanoparticles for coating agents and the use of same. In the present invention nanoparticles are used for wood impregnation, and in this case the product produced is not used as wood coating, but as protective and stabilizing agent thereof on being internally introduced in the sheet object to be treated by vacuum and pressure processes, where said penetration depends on the specific resistance to flexural strength one wants to achieve.

The problem the current state of the art resolves is that of a method and a product which makes it possible to enhance the resistance properties in sheets of wood, thus increasing its characteristic resistance to flexural strength and allowing the prediction of said properties in an exact manner and which permit complying with building codes, something which it has not been possible to currently resolve, due to the typical characteristics of a material from a living being.

### DESCRIPTION OF THE DRAWINGS

To complement the description being made and in order to aid towards a better understanding of the process characteristics, in accordance with a preferred example of practical embodiment thereof, a set of drawings is attached as an integral part of said description, wherein the following has been represented with illustrative and non-limitative character:
Figure 1 shows a shows a diagram of the treatment process in the first phase of initial vacuum.
Figure 2 shows a diagram of the treatment process in its second phase of chamber filling.
Figure 3 shows a diagram of the treatment process in its third phase of Pressure Application.
Figure 4 shows a diagram of the treatment process in its fourth phase of emptying of the chamber.
Figure 5 shows a diagram of the treatment process in its last phase of Final Vacuum.
Figure 6 shows a diagram of the first phase of the vac-vac treatment.
Figure 7 shows a diagram of second phase of the treatment applying initial vacuum, starting to be impregnated with the preservative.
Figure 8 shows a diagram of the second phase of the treatment, where complete impregnation is observed.
Figure 9 shows the finished product as a second vacuum is applied

### DESCRIPTION OF THE INVENTION

The preferred embodiment of the invention consists of a method and a product resulting from said method, with characteristics obtained from multiple tests on sheets of wood, using an autoclave which can be vacuum-pressure-vacuum or vacuum-vacuum and the combination of nanotechnology as treating elements.

Treatment in an autoclave consists of introducing fungicide and insecticide products subjecting the wood to an initial vacuum and to a pressure, of the impregnating products, to finally recover the excess product with a final vacuum. To guarantee adequate absorption, it is necessary to guarantee that the material is relatively dry (moisture content less than 25%) before being introduced in the autoclave; otherwise, correct retention of the product in the wood cannot be guaranteed.

In this case, as preferred embodiment of the invention, and with non-limitative character, the following wood treatment process in combination with nanoparticles, preferably carbon nanotubes or clay nanotubes, is described.

The process starts by introducing the dry wood (2), with moisture content less than 25%, in the chamber (1) of the autoclave, and an initial vacuum is applied to extract all possible air from the wood, as well as from inside the chamber (2). The vacuum must be at least 85%, lasting between 15 and 90 minutes.

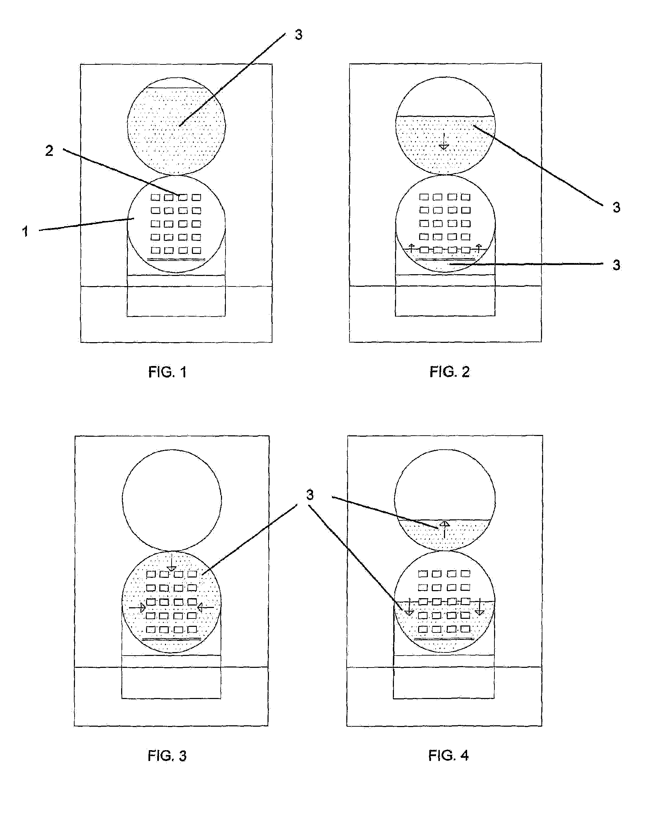

Next, as indicated in figure 2, the chamber is fully filled with the impregnating liquid (oil-soluble or water-soluble preservative) forming an emulsion with nanoparticles (3), preferably carbon nanotubes, clay nanotubes or similar, maintaining the vacuum. The vacuum is eliminated and pressure is applied at 8 to 20 bars for a time between 20 minutes and 5 hours, being maintained until complete saturation and, in this way, forcing the entry of said liquid deep inside the wood. Once this time has elapsed, the autoclave chamber is emptied, sending all the solution which has not been injected in the wood to a tank. Finally, a final vacuum is applied to rebalance the internal pressures in the wood, stopping the scope of the air which had been compressed during the pressure phase and thus avoid the dripping of the wood at the exit of the autoclave.

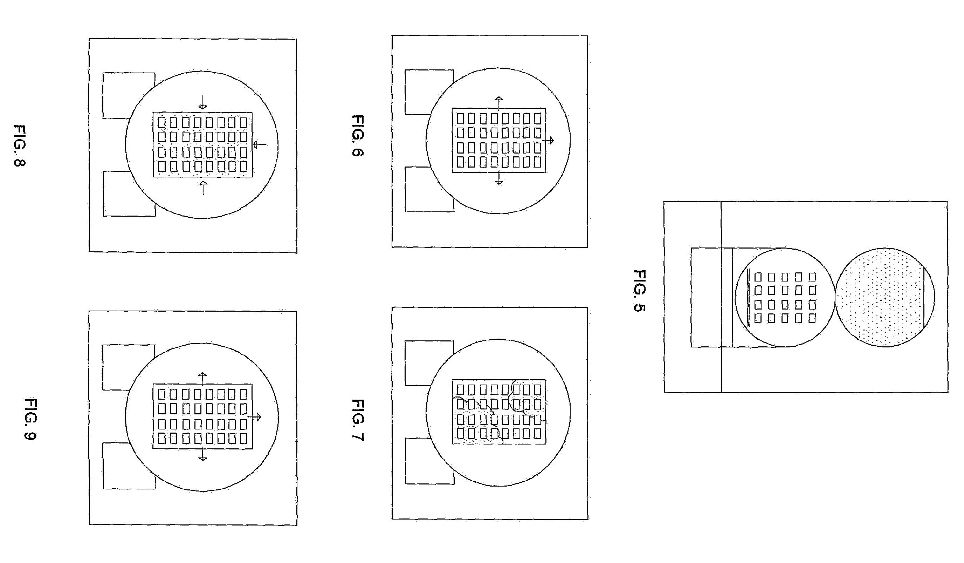

Another preferred embodiment of the invention consists of using the method called "vac-vac", which optimizes the use of the preservative and minimizes the increase in wood moisture content. The wood is housed within a hermetically sealed autoclave (Figure 6). Generating a vacuum inside the autoclave in order to reduce to an acceptable level the amount of air found within the cellular cavities of the wood. Once this vacuum point has been reached, the autoclave is flooded with the preservative to be absorbed by the wood (Figure 7). After the autoclave is flooded the system is brought to atmospheric pressure until reaching a desired absorption level (Figure 8). A second vacuum is applied to remove the excess preservative solution (Figure 9).

## Claims

1. Method for obtaining a finished wood product, of the type which use an autoclave wherein sheets of dry wood having a moisture content of less than 25% are introduced, which comprises the stages of:
- Applying an initial vacuum to extract the air from inside the chamber of the autoclave and the wood,
- Introducing a preservative to be absorbed by the wood, without altering the vacuum and when the chamber has been filled with said preservative pressure is applied until the wood is saturated,
- The excess preservative solution is then returned to a tank, and a final vacuum is applied to re-establish the internal pressure of the wood and dry same,
- **characterized in that** said preservative to be absorbed by the wood comprises an emulsion formed by a mixture of
- water-soluble preservative with added nanoparticles or oil-soluble preservative with added nanoparticles.

2. Method for obtaining a finished wood product according to claim 1, **characterized in that** said emulsion formed by a mixture of water-soluble preservative with added nanoparticles is formed by the combination of soluble salts belonging to the group of Boron, Copper, Zinc, Chromium, or Tin and nanoparticles, preferably from the group of carbon nanotubes, clay nanotubes or similar.

3. Method for obtaining a finished wood product according to claim 1, **characterized in that** said emulsion formed by a mixture of oil-soluble preservative is formed by the combination of the group of oils derived from the distillation of coal tar, pentachlorophenol or similar and nanoparticles from the group of carbon nanotubes, clay nanotubes or similar.

4. Method for obtaining a finished wood product according to claim 1, **characterized in that** the initial vacuum is applied in a range of approximately 15 to 90 minutes.

5. Method for obtaining a finished wood product according to claim 1, **characterized in that** after the chamber is saturated with the preservative emulsion, a pressure of approximately 8 to 20 bars is applied, for a time between 20 minutes and 5 hours.

6. Finished wood product according to the method described in the previous claims, **characterized in that** it has nanoparticles internally inserted in the sheet of dry wood to be treated, which penetrate to a distance within the sheet which depend on the specific resistance to flexural strength one wants to achieve.

7. Finished wood product according to claim 4, where said nanoparticles are preferably from the group of carbon nanotubes, clay nanotubes or similar.

8. Method for obtaining a finished wood product, of the type which use an autoclave wherein sheets of dry wood having a moisture content of less than 25% are introduced, which comprises the stages of:
Generating a vacuum inside the autoclave in order to reduce to an acceptable level the amount of air found within the cellular cavities of the wood.
Once this vacuum point has been reached, the autoclave is flooded with the preservative to be absorbed by the wood.
After the autoclave is flooded the system is brought to atmospheric pressure until reaching a desired absorption level.
A second vacuum is applied to remove the excess preservative solution
**characterized in that** said preservative absorbed by the wood comprises an emulsion formed by a mixture of water-soluble preservative with added nanoparticles or oil-soluble preservative with added nanoparticles.

9. Method for obtaining a finished wood product according to claim 8, **characterized in that** said emulsion formed by a mixture of water-soluble preservative with added nanoparticles is formed by the combination of soluble salts belonging to the group of Boron, Copper, Zinc, Chromium, or Tin and nanoparticles, preferably from the group of carbon nanotubes, clay nanotubes or similar.

10. Method for obtaining a finished wood product according to claim 8, **characterized in that** said emulsion formed by a mixture of oil-soluble preservative is formed by the combination of the group of oils derived from the distillation of coal tar, pentachlorophenol or similar and nanoparticles, preferably from the group of carbon nanotubes, clay nanotubes or similar.

11. Finished wood product according to the method described in claim 8, **characterized in that** it has nanoparticles inserted internally in the sheet of dry wood to be treated, which penetrate to a distance within the sheet which depend on the specific resistance to flexural strength one wants to achieve.

12. Finished wood product according claim 11, **where** said nanoparticles are preferably from the group of carbon nanotubes, clay nanotubes or similar.
